# FASCICULE DE BREVET EUROPEEN

(11) **EP 0 350 401 B1**
(45) Date de publication et mention de la délivrance du brevet: **01.09.1993**
(21) Numéro de dépôt: 89401945.4
(22) Date de dépôt: 06.07.1989
(51) Int. Cl.: G21C 17/06, G01M 3/22

(54) **Procédé et dispositif d'identification du défaut d'étanchéité d'un crayon absorbeur de neutrons d'un réacteur nucléaire**
Verfahren und Vorrichtung zur Identifizierung von Dichtheitsfehlern eines Neutronenabsorberstabes eines Kernreaktors
Method and device for tightness-failure identification of nuclear reactor neutron absorber rod

(30) Priorité: 06.07.1988 FR 8809160
(43) Date de publication de la demande: 10.01.1990
(73) Titulaire: ELECTRICITE DE FRANCE Service National, 75008 Paris (FR); COMMISSARIAT A L'ENERGIE ATOMIQUE, 75015 Paris (FR)
(72) Inventeur: Pelletier, Jacques, F-92190 Meudon (FR); Parrat, Daniel, F-38180 Echirolles (FR)
(74) Mandataire: Martin, Jean-Jacques

(56) Documents cités:
- EP-A- 0 213 028
- DE-A- 2 700 988
- DE-B- 1 248 822
- FR-A- 2 569 041

## Description

La présente invention est relative à un procédé et à un dispositif d'identification du défaut d'étanchéité d'un crayon absorbeur de neutrons d'un réacteur nucléaire.

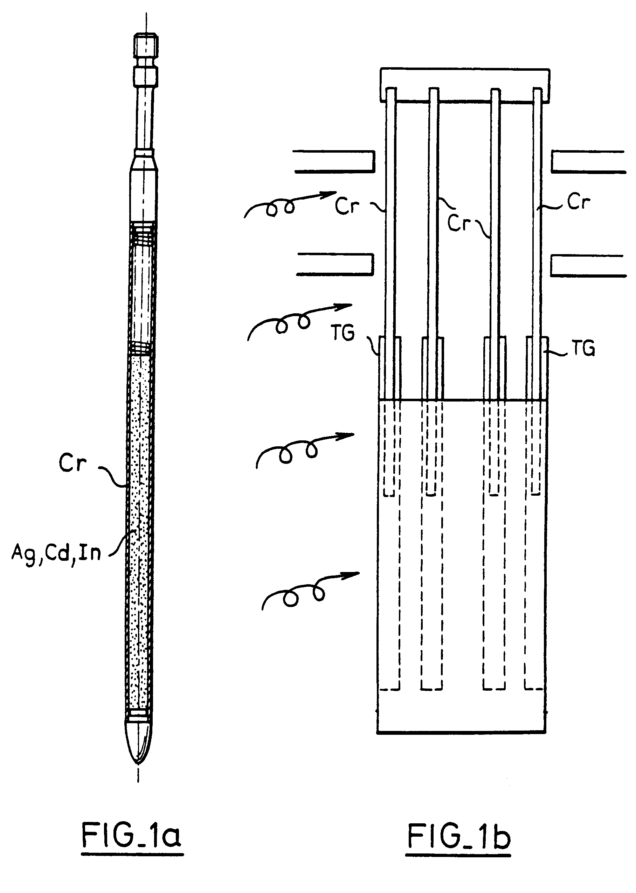

Dans les réacteurs nucléaires de la filière à eau pressurisée utilisés dans les centrales nucléaires de production d'énergie électrique, le coeur du réacteur nucléaire est formé par un assemblage de barreaux d'uranium enrichi entre lesquels des crayons absorbeurs de neutrons sont introduits afin de contrôler l'activité du réacteur. De manière générale, ainsi que représenté en figure 1a, les crayon Cr sont constitués par des tubes creux en acier inoxydable, l'intérieur de chaque tube étant rempli d'un alliage métallique formé de 80 % d'argent, 15 % d'indium et 5 % de cadmium. Les tubes, dans le cas d'un réacteur de puissance 900 MW par exemple, ont une longueur de l'ordre de 3,60 m et sont assemblés en une grappe au moyen d'une araignée, formée par une pièce métallique, permettant la fixation des crayons absorbeurs de neutrons par une de leur extrémité. Ainsi qu'on l'a représenté en figure 1b de matière schématique, dans le but de contrôler l'activité du réacteur nucléaire, les crayons absorbeurs de neutrons Cr constitués en grappe sont introduits dans des tubes de passage TG ménagés dans le coeur du réacteur. Le degré d'enfoncement des crayons absorbeurs de neutrons détermine la puissance instantanée du réacteur nucléaire, l'enfoncement total des crayons correspondant à l'arrêt du réacteur. En fonctionnement du réacteur, selon la puissance électrique appelée sur le réseau de distribution d'énergie électrique, les crayons absorbeurs de neutrons constituant la grappe sont au contraire dégagés des tubes de passage, sur les trois quarts de leur longueur environ. Le coeur du réacteur et les crayons absorbeurs de neutrons sont alors soumis à un flux très important d'eau pressurisée, de l'ordre de 3 000 m3/s, afin de réchauffer celle-ci au contact du coeur du réacteur. Les crayons absorbeurs de neutrons doivent, en raison du flux de liquide auquel ils sont soumis, être maintenus par des plaques de guidage sur leur partie libre non engagée dans les tubes de guidage. Les nombreuses turbulences de l'eau pressurisée soumettent les crayons absorbeurs de neutrons, notamment au niveau des plaques de guidage et des tubes de guidage, à des chocs répétés lesquels, à la longue, provoquent un phénomène d'usure locale des crayons correspondants avec les risques de perte d'étanchéité du tube d'acier constituant chaque crayon absorbeur de neutrons. L'argent contenu dans les tubes constitutifs des crayons absorbeurs de neutrons devenant radioactif par capture neutronique, notamment en partie basse des crayons absorbeurs de neutrons où le flux de neutrons n'est jamais négligeable, les risques de perte d'étanchéité des tubes d'acier constituant chaque crayon absorbeur de neutrons se traduisent par des risques importants de contamination de l'environnement et des personnes lors des manipulations des grappes hors du coeur du réacteur.

En outre, le risque de rupture totale des crayons absorbeurs de neutrons en leur partie inférieure n'est pas négligeable, ces parties inférieures risquant alors de choir au fond du tube de guidage, ce qui a pour effet, en raison du risque de coinçage, de créer un risque supplémentaire d'empêchement de l'arrêt du réacteur nucléaire. Des études systématiques ont montré qu'un taux de rupture totale de 50 % d'au moins un crayon absorbeur de neutrons est atteint après une durée de service de 4 à 5 ans.

DE-B-1 248 822 décrit un procédé de détection des défauts d'étanchéité d'un crayon combustible, présumé défectueux, d'un réacteur nucléaire qui est essentiellement un procédé de lessivage des produits de fission existant à l'intérieur du crayon combustible. Ce procédé de lessivage utilise des variations répétées de la pression et température de l'eau de lessivage contenue dans une enceinte étanche. L'eau de lessivage est soumise à une analyse de radioactivité visant à y détecter la présence éventuelle de produits de fission et, par conséquent, l'existence d'un défaut d'étanchéité.

Bien entendu, ce procédé ne saurait pas s'appliquer à des crayons absorbeurs de neutrons qui ne contiennent pas d'éléments lessivables.

Le procédé et le dispositif d'identification du défaut d'étanchéité d'un crayon absorbeur de neutrons selon l'invention ont pour objet de permettre l'identification du défaut d'étanchéité intempestive des crayons absorbeurs de neutrons d'un réacteur nucléaire.

Le procédé d'identification du défaut d'étanchéité d'au moins un crayon absorbeur de neutrons d'un réacteur nucléaire selon l'invention - ce crayon comportant un tube et un coeur remplissant le tube et constitué d'un alliage métallique - est remarquable en ce qu'il comprend les étapes suivantes :
- placement dudit crayon dans une enceinte étanche remplie d'une solution chimique agressive, dite solution d'analyse ;
- placement de ladite solution sous pression pendant une durée préfixée, afin de faire pénétrer la solution dans le crayon par le défaut d'étanchéité du crayon présume défectueux ;
- relâchement ensuite de ladite pression afin de permettre une sortie de la solution hors du crayon présumé défectueux dans l'enceinte étanche;
- analyse de ladite solution afin d'assurer la mise en évidence dans la solution de dérivés chimiques des métaux constitutifs du coeur dudit crayon, et donc du défaut d'étanchéité.
La solution d'analyse est mise sous pression afin de faire pénétrer celle-ci dans le crayon par le défaut d'étanchéité du présumé crayon défectueux, la pression étant ensuite relâchée afin de permettre une sortie de la solution hors du crayon présumé défectueux. Une analyse de la solution est ensuite effectuée afin de permettre la mise en évidence dans la solution de dérivés chimiques des métaux constitutifs du coeur du crayon. Le dispositif d'identification du défaut d'étanchéité d'un crayon absorbeur de neutrons d'un réacteur nucléaire selon l'invention est remarquable en ce qu'il comprend une enceinte étanche susceptible de recevoir au moins un crayon absorbeur de neutrons à analyser. L'enceinte étanche est munie d'un circuit d'alimentation en solution d'analyse et d'un circuit d'analyse relié à l'enceinte étanche et comprenant une pompe de circulation de la solution d'analyse, un pot de comptage de particules radioactives, des moyens de comptage des particules radioactives et une vanne de prélèvement de la solution d'analyse.

Le procédé et le dispositif selon l'invention trouvent application au contrôle d'étanchéité des crayons abosrbeurs de neutrons des réacteurs nucléaires des centrales nucléaires à eau pressurisée.

L'invention sera mieux comprise à la lecture de la description et à l'observation des dessins dans lesquels, outre les figures 1a et 1b, déjà décrites plus haut, relatives respectivement à un crayon absorbeur de neutrons et à des installations actuelles utilisées dans les centrales nucléaires:
- la figure 2 représente un schéma d'une installation susceptible de permettre la mise en oeuvre du procédé selon l'invention,
- la figure 3 représente le schéma d'une installation complète d'un dispositif d'identification du défaut d'étanchéité d'un crayon absorbeur de neutrons dans une centrale nucléaire.

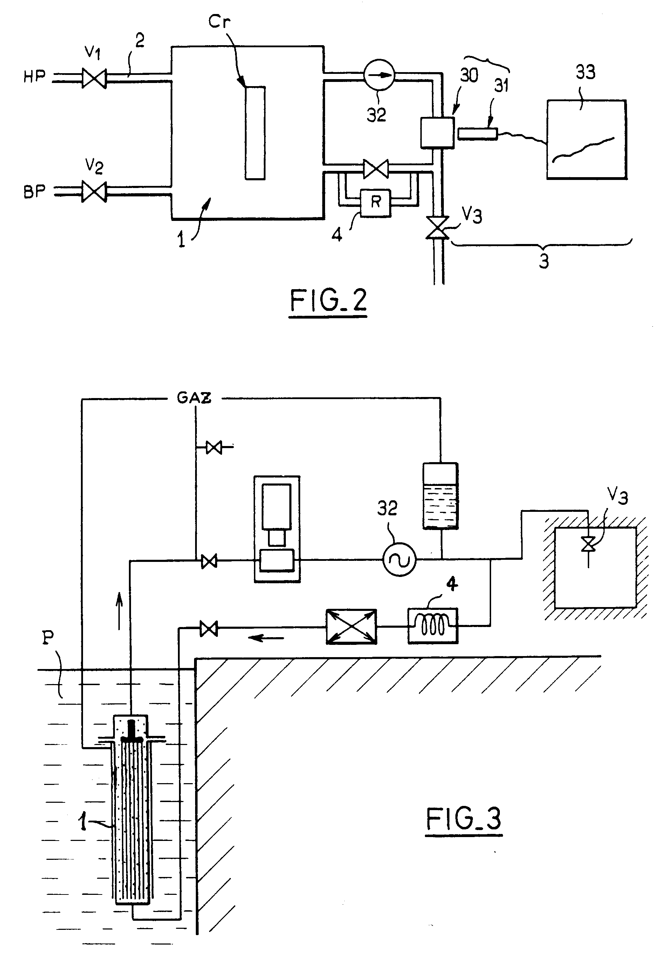

Le procédé d'identification du défaut d'étanchéité d'un crayon absorbeur de neutrons d'un réacteur nucléaire conforme à l'objet de l'invention sera tout d'abord décrit en liaison avec la figure 2.

Ainsi qu'on l'a représenté de manière schématique sur la figure précitée, le crayon noté Cr est placé dans une enceinte étanche notée 1. Cette enceinte est remplie d'une solution agressive dite solution d'analyse. La solution agressive peut être constituée par une solution d'un acide pris dans les groupes suivants : nitrique, sulfurique, chlorydrique, la concentration de cette solution étant comprise entre N/100 et 10 N. A titre d'exemple non limitatif, elle peut être de N/30, où N désigne la normalité de la solution.

La solution d'analyse précitée est ensuite mise sous pression, notée HP, afin de faire pénétrer cette solution dans le crayon Cr par le défaut d'étanchéité de ce crayon présumé défectueux. La pression est ensuite relâchée, la solution étant amenée à un niveau de pression basse pression, notée BP, afin de permettre une sortie de la solution, qui a pénétré dans le crayon défectueux, hors de celui-ci et le retour de cette solution dans l'enceinte étanche 1.

Une analyse de la solution est effectuée ensuite afin de permettre la mise en évidence dans cette solution de sels métalliques des métaux constitutifs du coeur du crayon.

Pour un crayon Cr dont le coeur est constitué en un alliage de cadmium Cd, d'indium In et d'argent Ag, les sels métalliques sont les sels d'argent, d'indium et de cadmium.

Outre la mise en évidence des dérivés nitrés, le procédé objet de l'invention peut avantageusement consister à effectuer au niveau de la solution contenue dans l'enceinte 1, après relâchement de la pression, la détection d'un isotope radioactif de l'alliage, plus spécialement celui de l'argent noté Ag 110 m par rapport à une valeur de concentration de seuil de cet isotope.

De manière avantageuse, la détection de l'isotope radioactif de l'argent Ag 110 m est effectuée par spectrométrie gamma.

Afin d'améliorer la détection de l'isotope radioactif de l'argent Ag 110 m précité, le procédé objet de l'invention peut également consister, préalablement à l'étape selon laquelle le crayon Cr est placé dans l'enceinte étanche 1 remplie de solution d'acide, cette solution constituant alors la solution de départ, à effectuer par spectrométrie la détermination de la concentration en isotopes radioactifs dont Ag 110 m de la solution de départ précitée. La concentration de la solution de départ en isotopes radioactifs dont Ag 110 m est alors retenue comme valeur de concentration de seuil pour la mesure de la concentration en isotopes radioactifs, notamment de l'argent.

La concentration chimique de l'argent dans l'eau peut également être mesurée.

Selon un aspect particulièrement avantageux du procédé objet de l'invention, la pression HP appliquée à la solution d'analyse afin de faire pénétrer cette solution dans le crayon Cr est maintenue pendant une durée d'au moins dix minutes. Cette pression peut avantageusement être égale à plusieurs bars.

En outre, afin d'accélérer la réaction chimique de la solution sur les métaux constitutifs du coeur du crayon Cr, la solution, préalablement ou suite à l'introduction du crayon dans l'enceinte étanche 1, peut être soumise à un réchauffage.

En outre, le procédé selon l'invention peut comporter une étape consistant à mesurer la concentration chimique de l'argent, de l'indium et du cadmium dans l'eau avant placement du crayon dans l'enceinte, cette étape étant répétée après les opérations de mise en pression et de réchauffage.

Une description plus détaillée d'un dispositif permettant la mise en oeuvre du procédé objet de l'invention sera donnée en liaison avec la figure 2.

Selon la figure précitée, le dispositif comprend l'enceinte étanche précédemment citée et notée 1 susceptible de recevoir au moins un crayon Cr à analyser. Bien entendu on comprendra que le dispositif objet de l'invention pourra avantageusement être mis en oeuvre de façon que l'enceinte étanche 1 soit susceptible d'accueillir non pas un seul crayon Cr mais une grappe entière afin d'effectuer le contrôle de celle-ci.

L'enceinte étanche 1 est munie d'un circuit noté 2 d'alimentation en solution d'analyse. Le circuit d'alimentation en solution d'analyse comporte une canalisation à haute pression munie d'une vanne V1 et une canalisation à basse pression munie d'une vanne V2. On comprendra bien entendu que l'actionnement des vannes V1 et V2, la canalisation HP étant reliée par exemple à un système compresseur, permet d'une part la mise en pression de la solution d'analyse dans l'enceinte étanche 1 et le maintien de celle-ci en pression par l'ouverture de la vanne V1, la vanne V2 étant fermée ou, au contraire, par la fermeture de la vanne V1 et l'ouverture de la vanne V2, la vanne V2 étant installée sur la canalisation basse pression, de ramener la pression à une valeur suffisament faible pour permettre à la solution ayant pénétré dans le crayon Cr après attaque chimique des métaux constitutifs du coeur de celui-ci de ressortir dans la solution contenue dans l'enceinte étanche 1. Le circuit haute pression HP peut par exemple être connecté à un compresseur délivrant une pression comprise entre un et quinze bars. A titre d'exemple non limitatif, celle-ci peut être voisine de douze bars. Le circuit basse pression BP pouvant au contraire être relié à un circuit permettant d'établir dans l'enceinte étanche 1 une pression voisine de la pression du milieu ambiant de celle-ci ou égale à quelques bars.

Ainsi qu'on le remarquera en outre en figure 2, le dispositif objet de l'invention comporte également un circuit d'analyse 3 relié à l'enceinte étanche 1. Ce circuit d'analyse 3 comporte au moins une pompe de circulation 32 de la solution d'analyse et un pot de comptage 30 de particules radioactives, dont l'isotope Ag 110 m de l'argent. Des moyens de comptage 31 des particules radioactives sont également prévus, ces moyens étant associés au pot de comptage 30. De manière avantageuse, le pot de comptage 30 et les moyens de comptage 31 peuvent être constitués par un système normalement disponible dans le commerce pour effectuer le comptage des rayons gamma. Bien entendu, le pot de comptage 30 et les moyens de comptage 31 sont avantageusement complétés par un système d'affichage 33 lequel permet d'afficher le résultat des mesures de comptage précitées.

En outre, le circuit d'analyse 3 comporte également une vanne V3 de prélèvement de la solution d'analyse. En liaison avec la figure 2, l'enchaînement des opérations permettant la mise en oeuvre du procédé est le suivant :

Selon un mode particulièrement avantageux, et préalablement à la mise en pression de l'enceinte étanche 1 et avant introduction des crayons Cr à tester dans l'enceinte étanche 1, un prélèvement de la solution d'analyse est effectué par l'intermédiaire de la vanne V3 afin de mesurer la teneur résiduelle de la solution en sels métalliques, notamment de l'argent. De la même façon, un comptage à l'aide des moyens de comptage 31 des particules radioactives de cette solution de départ est effectué afin de déterminer la valeur de seuil correspondant à la présence des isotopes radioactifs, dont Ag 110 m précédemment cité. Après introduction du crayon à tester Cr dans l'enceinte étanche 1, l'ouverture de la vanne V1 permet la mise en pression de l'enceinte, cette mise en pression étant effectuée à une valeur comprise entre un et quinze bars.

Cette pression est maintenue pendant au moins dix minutes, puis la vanne V1 est à nouveau fermée et la vanne V2 est ouverte, ce qui permet d'assurer une dépressurisation.

Les moyens d'affichage 33 permettent de suivre l'évolution du signal de comptage en ligne délivré par les moyens de comptage 31.

Un échantillonage de la solution d'analyse par l'intermédiaire de la vanne V3 permet alors d'effectuer un bilan de matière dans le fluide et un dosage des ions argent, indium ou cadmium ou de leurs isotopes radioactifs, dans celle-ci.

La comparaison des valeurs mesurées en dérivés nitrés des éléments constitutifs du coeur du crayon par rapport à leur valeur dans la solution de départ prise comme valeur de seuil permet alors d'identifier le crayon Cr ou la grappe non étanche.

Ainsi qu'on l'a représenté en outre en figure 2, le circuit d'analyse 3 comporte également, connecté en by-pass sur ce circuit d'analyse, un circuit 4 réchauffeur de la solution. De manière avantageuse, le circuit 4 réchauffeur de solution peut être constitué par tout circuit de réchauffage électrique d'une enceinte thermostatée permettant de porter la solution d'analyse mise en circulation par la pompe de circulation 32 à une température comprise entre 30° et 90°C. A titre d'exemple non limitatif, celle-ci peut être de 75°C.

Sur la figure 3, on a représenté le schéma d'une installation complète d'un dispositif objet de l'invention. Bien entendu, le ou les crayons et la grappe correspondante présentent un degré de radioactivité non négligeable et la manipulation de ces derniers ne peut être envisagée que en immersion dans l'eau de la piscine du réacteur nucléaire correspondant. Dans ce but, et bien que les outils de manipulation du ou des crayons et de la grappe n'aient pas été représentés sur la figure 3, le dispositif objet de l'invention, et en particulier l'enceinte étanche 1 est immergée dans la piscine P du réacteur nucléaire. Bien entendu, l'ensemble des circuits constitués par le circuit haute pression HP, le circuit basse pression BP, l'enceinte étanche 1 et le circuit d'analyse 3 est étanche à l'eau de la piscine.

Sur la figure 3 on a également représenté la vanne V3 dans une enceinte protégée contre le rayonnement ionisant, l'analyse en dérivés chimiques des métaux constitutifs du coeur de chaque crayon pouvant être effectuée dans l'enceinte précitée.

On a ainsi décrit un procédé et un dispositif permettant de détecter ou identifier le défaut d'étanchéité d'un ou plusieurs crayons absorbeurs de neutrons d'un réacteur nucléaire.

Le procédé et le dispositif objet de l'invention sont particulièrement avantageux dans la mesure où ils permettent un contrôle systématique des pièces essentielles pour le fonctionnement d'un réacteur nucléaire à eau pressurisée, pièces essentielles tels que les crayons absorbeurs de neutrons et les grappes correspondantes pour le contrôle du fonctionnement du réacteur.

## Revendications

1. Procédé d'identification du défaut d'étanchéité d'au moins un crayon absorbeur de neutrons d'un réacteur nucléaire, ledit crayon comportant un tube et un coeur remplissant ce tube et constitué d'un alliage métallique, lequel procédé comprend les étapes suivantes :
- placement dudit crayon (**Cr**) dans une enceinte étanche (**1**) remplie d'une solution chimique agressive, dite solution d'analyse ;
- placement de ladite solution sous pression (**HP**) pendant une durée préfixée, afin de faire pénétrer la solution dans le crayon (**Cr**) par le défaut d'étanchéité du crayon présumé défectueux ;
- relâchement ensuite de ladite pression (**BP**) afin de permettre une sortie de la solution hors du crayon présumé défectueux dans l'enceinte étanche (**1**) ;
- analyse (**3**) de ladite solution afin d'assurer la mise en évidence dans la solution de dérivés chimiques des métaux constitutifs du coeur dudit crayon (**Cr**), et donc du défaut d'étanchéité.

2. Procédé selon la revendication 1, caractérisé en ce que la solution chimique agressive est une solution d'un acide pris dans le groupe suivant : nitrique, sulfurique, chlorhydrique.

3. Procédé selon l'une des revendications 1 ou 2, caractérisé en ce que pour un crayon dont le coeur est constitué en un alliage de cadmium (**Cd**), d'indium (**In**) et d'argent (**Ag**), lesdits dérivés chimiques sont les sels métalliques des éléments constitutifs de l'alliage.

4. Procédé selon l'une quelconque des revendications 1 à 3, caractérisé en ce que, outre la mise en évidence desdits dérivés chimiques, ledit procédé consiste à effectuer au niveau de la solution, après relâchement de la pression, la détection (**30, 31**) des isotopes radioactifs de l'alliage, notamment de l'argent **Ag 110 m**, par rapport à une valeur de concentration de seuil.

5. Procédé selon la revendication 4, caractérisé en ce que la détection des isotopes radioactifs de l'alliage, notamment de l'argent **Ag 110 m**, est effectué par spectrométrie gamma.

6. Procédé selon la revendication 5, caractérisé en ce que préalablement à l'étape consistant à placer ledit crayon dans l'enceinte étanche (**1**) remplie d'une solution d'acide, laquelle constitue alors la solution de départ, ledit procédé consiste à effectuer, par spectrométrie, la détermination des concentrations en isotopes radioactifs dont **Ag 110 m** de la solution de départ, lesdites concentrations de la solution de départ étant retenues comme valeur de concentration de seuil.

7. Procédé selon l'une quelconque des revendications précédentes, caractérisé en ce que ladite pression (**HP**) appliquée à la solution afin de faire pénétrer la solution dans le crayon est maintenue pendant une durée d'au moins dix minutes.

8. Procédé selon l'une quelconque des revendications précédentes, caractérisé en ce que ladite solution préalablement ou suite à l'introduction dudit crayon dans celle-ci est soumise à un réchauffage (**4**) permettant d'accélérer la réaction chimique de la solution sur les métaux constitutifs du coeur dudit crayon.

9. Procédé selon l'une quelconque des revendications 7 ou 8 appliquées aux revendications 3 à 6, caractérisé en ce qu'il comporte en outre :
- une étape consistant à mesurer la concentration chimique de l'argent, indium, cadmium dans l'eau avant placement du crayon dans l'enceinte,
- a répéter cette étape de mesure après les opérations de mise en pression et de réchauffage.

10. Dispositif pour la mise en oeuvre du procédé selon l'une quelconque des revendications 1, 2 ou 7, caractérisé en ce qu'il comprend :
- une enceinte étanche (**1**) susceptible de recevoir au moins ledit crayon absorbeur de neutrons (**Cr**), ladite enceinte étant munie d'un circuit (**2**) d'alimentation en ladite solution chimique agressive d'analyse, ce circuit d'alimentation (**2**) étant équipé d'un circuit haute pression (**HP**), pour la mise sous pression de la solution d'analyse dans l'enceinte étanche (**1**) pendant une durée préfixée, et d'un circuit basse pression (**BP**) pour le relâchement de la pression (**BP**) ainsi établie, après application de la haute pression (**HP**), lesdits circuits à haute (**HP**) et à basse (**BP**) pression étant chacun muni d'une vanne de commande (**V1, V2**), et
- un circuit d'analyse (**3**) relié à ladite enceinte étanche (**1**), comportant au moins une pompe de circulation (**32**) de la solution d'analyse et une vanne (**V3**) de prélèvement de cette solution d'analyse, destiné à la mise en évidence dans la solution de dérivés chimiques des métaux constitutifs du coeur du crayon (**Cr**), et donc du défaut d'étanchéité.

11. Dispositif selon la revendication 10, pour la mise en oeuvre du procédé selon l'une quelconque des revendications 3 à 6 et 9, caractérisé en ce que ledit circuit d'analyse (**3**) comporte également :
- un pot de comptage (**30**) de particules radioactives dont l'isotope **Ag 110 m** de l'argent,
- des moyens de comptage (**31**) desdites particules radio-actives.

12. Dispositif selon la revendication 10, pour la mise en oeuvre du procédé selon la revendication 8, caractérisé en ce que ledit circuit d'analyse (**3**) comprend, en outre, en by-pass, un circuit (**4**) réchauffeur de solution.

13. Dispositif selon l'une quelconque des revendications 10 à 12, caractérisé en ce que, ledit dispositif étant immergé dans une piscine (**P**) du réacteur nucléaire, l'ensemble des circuits constitués par le circuit haute pression (**HP**), le circuit basse pression (**BP**), l'enceinte étanche (**1**) et le circuit d'analyse (**3**) sont étanches à l'eau de la piscine (**P**).

## Claims

1. A method for the identification of the leakiness of a neutron-absorbing pencil of a nuclear reactor, said pencil comprising a tube and a core filling the tube and consisting of a metallic alloy, said method comprising the following steps of :
- placing said pencil (Cr) in an impervious chamber filled with an aggressive chemical solution called an analysis solution ;
- putting said solution under pressure (HP) during a predetermined time in order to make the solution penetrate the pencil (Cr) through the leakiness fault of the presumably defective pencil ;
- then relaxing said pressure (BP) to enable the solution to go out of the presumably defective pencil in the impervious chamber ;
- performing an analysis of said solution in order to enable the showing up, in the solution, of chemical derivates of the constituent metals of the core of said pencil and thus of the leakiness.

2. A method according to claim 1, characterized in that the aggressive chemical solution is a solution of an acid taken from the following group : nitric acid, sulphuric acid, hydrochloric acid.

3. A method according to any of claims 1 or 2, characterized in that, for a pencil with its core formed by an alloy of cadmium (Cd), indium (In) and silver (Ag), said chemical derivatives are the metallic salts of the constituent elements of the alloy.

4. A method according to any of claims 1 to 3, characterized in that, in addition to the showing up of said chemical derivatives, the method consists in performing, at the solution, after relaxing the pressure, the detection (30, 31) of the radioactive isotopes of the alloy, notably silver Ag 110 m, with reference to a threshold value of concentration.

5. A method according to claim 4, characterized in that the detection of the radioactive isotopes of the alloy, notably of silver Ag 110 m is done by gamma spectrometry.

6. A method according to claim 5, characterized in that, prior to the step in which said pencil is placed in the impervious chamber (1) filled with an acid solution, which forms the starting solution, said method consists in the determining, by spectrometry, of the concentrations in radioactive isotopes, including Ag 110 m, of the starting solution, said concentrations of the starting solution being chosen as a threshold value of concentration.

7. A method according to any of the preceding claims, characterized in that said pressure (HP) applied to the solution in order to make the solution penetrate the pencil is maintained for a period of at least ten minutes.

8. A method according to any of the preceding claims, characterized in that said solution, before or after the insertion of said pencil in it, is subjected to a heating process (4) used to accelerate the chemical reaction of the solution on the constituent elements of the core of said pencil.

9. A method according to any of claims 7 or 8 as applied to claims 3 to 6, characterized in that it further comprises :
- a step consisting in the measurement of the chemical concentration of silver, indium, cadmium in the water before the pencil is placed in the chamber ;
- the repeating of this measuring step after the pressurizing and heating operations.

10. A device for the application of the method according to any of claims 1, 2 or 7, characterized in that it comprises :
- an impervious chamber (1) capable of receiving at least said neutron-absorbing pencil (Cr), said chamber being provided with a circuit (2) for the supply of the analyzing agressive chemical solution, the circuit (2) for the supply including a high pressure (HP) circuit for the putting under pressure of the analyzing solution in the impervious chamber (1) during a predetermined time and a low pressure circuit (BP) for the relaxing of the pressure (BP) thus established after application of the high pressure, said high and low pressure circuits being each provided with a control valve (V₁, V₂), and
- an analysis circuit (3) connected to said impervious chamber (1) comprising at least a pump for the circulation (32) of the analyzing solution, and a valve (V₃) to sample the analyzing solution to enable the showing up in the solution of chemical derivatives of the constituent metals of the core of the said pencil (Cr), and thus of the leakiness.

11. A device according to claim 10, for making use of the process according to any of claims 3 to 6 and 9, characterized in that the analysis circuit (3) also comprises :
- a vessel (30) for the counting of the radioactive particles including the silver isotope Ag 110 m ;
- means (31) to count said radioactive particles.

12. A device according to claim 10 for making use of the process according to claim 8, characterized in that the analysis circuit (3) further comprises, in a bypass, a solution heating circuit (4).

13. A device according to any of claims 10 to 12, characterized in that said device being immersed in the pool (P) of the nuclear reactor, the set of circuits formed by the high pressure circuit (HP), the low pressure circuit (BP), the impervious chamber (1) and the analysis circuit (3) are impervious to the water of the pool (P).

## Patentansprüche

1. Verfahren zum Identifizieren von Dichtheitsfehlern wenigstens eines Neutronenabsorberstabes eines Kernreaktors, wobei der Stab ein Rohr und einen Kern, der dieses Rohr ausfüllt und aus einer metallischen Legierung gebildet ist, umfaßt, wobei das Verfahren die folgenden Schritte aufweist:
- Anordnen des Stabes (Cr) in einer dichten Kammer (1), die mit einer aggressiven chemischen Lösung gefüllt ist, Analyselösung genannt;
- unter Druck (HP) Setzen der Lösung über eine zuvor festgelegte Zeitdauer, um die Lösung in den Stab (Cr) durch den Dichtheitsfehler des als fehlerhaft angenommenen Stabes eindringen zu lassen;
- anschließendes Entspannen des Druckes (BP), um ein Auslassen der Lösung aus dem als fehlerhaft angenommenen Stab in die dichte Kammer (1) zu erlauben;
- Analysieren (3) der Lösung, um in der Lösung chemische Derivate von metallischen Bestandteilen des Kerns des Stabes (Cr) und somit Dichtheitsfehler nachzuweisen.

2. Verfahren nach Anspruch 1, dadurch gekennzeichnet, daß die aggressive chemische Lösung eine Lösung einer Säure aus der folgenden Gruppe ist: Salpetersäure, Schwefelsaure, Salzsäure.

3. Verfahren nach einem der Ansprüche 1 oder 2, dadurch gekennzeichnet, daß für einen Stab, dessen Kern aus einer Cadmium (Cd)-, Indium (In)- und Silber (Ag)-Legierung gebildet ist, die chemischen Derivate die metallischen Salze der konstituierenden Elemente der Legierung sind.

4. Verfahren nach einem der Ansprüche 1 bis 3, dadurch gekennzeichnet, daß, über den Nachweis der chemischen Derivate hinaus, das Verfahren darin besteht, auf der Höhe der Lösung, nach dem Entspannen des Druckes, das Erfassen (30, 31) radioaktiver Isotope der Legierung zu bewirken, insbesondere von Silber Ag 110 m, in bezug auf einen Schwellenwert der Konzentration.

5. Verfahren nach Anspruch 4, dadurch gekennzeichnet, daß das Erfassen von radioaktiven Isotopen der Legierung, insbesondere von Silber Ag 110 m, durch Gammaspektrometrie bewirkt wird.

6. Verfahren nach Anspruch 5, dadurch gekennzeichnet, daß vor dem Schritt, der darin besteht, den Stab in der dichten Kammer (1) anzuordnen, die mit einer Säurelösung, die auch die austretende Lösung bildet, gefüllt ist, das Verfahren darin besteht, durch Spektrometrie die Bestimmung der Konzentrationen von radioaktiven Isotopen wie Ag 110 m in der austretenden Lösung zu bewirken, wobei die Konzentrationen der austretenden Lösung als Schwellenwerte der Konzentration festgehalten werden.

7. Verfahren nach einem der vorangehenden Ansprüche, dadurch gekennzeichnet, daß der Druck (HP), der der Lösung aufgegeben wird, um die Lösung in den Stab eintreten zu lassen, während einer Dauer von wenigstens zehn Minuten gehalten wird.

8. Verfahren nach einem der vorangehenden Ansprüche, dadurch gekennzeichnet, daß die Lösung vor oder nach dem Einführen des Stabes in sie einer Erwärmung (4) ausgesetzt wird, die es erlaubt, die chemische Reaktion der Lösung auf die metallischen Bestandteile des Kerns des Stabes zu beschleunigen.

9. Verfahren nach einem der Ansprüche 8 oder 9, angewendet auf die Ansprüche 3 bis 6, dadurch gekennzeichnet, daß es weiterhin umfaßt:
- einen Schritt, der darin besteht, die chemische Konzentration des Silbers, Indiums, Cadmiums in dem Wasser vor dem Anordnen des Stabes in der Kammer zu messen,
- diesen Schritt des Messens nach den Betriebsschritten des Unter-Druck-Setzens und des Erwärmens zu wiederholen.

10. Vorrichtung zum Durchführen des Verfahrens nach einem der Ansprüche 1, 2 oder 7, dadurch gekennzeichnet, daß sie aufweist:
- eine dichte Kammer (1), geeignet dafür, zumindest den Neutronenabsorberstab (Cr) aufzunehmen, wobei die Kammer mit einem Versorgungskreis (2) für die aggressive chemische Analyselösung versehen ist, wobei der Versorgungskreis (2) mit einem Hochdruckkreis (HP), um die Analyselösung in der dichten Kammer (1) über eine vorgegebene Zeitdauer unter Druck zu setzen, und einem Niederdruckkreis (NP), um den so eingerichteten Druck (BP), nach dem Aufgeben des Rochdruckes (HP) zu entspannen, ausgestattet ist, wobei sowohl der Rochdruck (HP)-als auch der Niederdruck (BP)-Kreis mit einem Steuerventil (V1, V2) versehen ist, und
- einen Analysekreis (3), verbunden mit der dichten Kammer (1), welcher wenigstens eine Umwälzpumpe (32) für die Analyselösung und ein Entnahmeventil (V3) für diese Analyselösung umfaßt, dazu bestimmt, in der Lösung chemische Derivate der Metallbestandteile des Kerns des Stabes (Cr) und somit Dichtheitsfehler nachzuweisen.

11. Vorrichtung nach Anspruch 10, zum Durchführen des Verfahrens nach einem der Ansprüche 3 bis 6 und 9, dadurch gekennzeichnet, daß der Analysekreis (3) ebenfalls umfaßt:
- eine Zählkammer (30) für radioaktive Teilchen des Isotopes Ag 110 m von Silber,
- Zähleinrichtungen (31) für die radioaktiven Teilchen.

12. Vorrichtung nach Anspruch 10, zum Durchführen des Verfahrens nach Anspruch 8, dadurch gekennzeichnet, daß der Analysekreis (3) außerdem in einem Bypass einen Kreis (4) zum Erwärmen der Lösung aufweist.

13. Vorrichtung nach einem der Ansprüche 10 bis 12, dadurch gekennzeichnet, daß die Vorrichtung in einem Becken (P) des Kernreaktors eingetaucht ist, wobei die Gesamtheit der Kreise, gebildet aus dem Hochdruckkreis (HP), dem Niederdruckkreis (BP), der dichten Kammer (1) und dem Analysekreis (3) wasserdicht in bezug auf das Becken (P) sind.
